# EUROPEAN PATENT APPLICATION

(11) **EP 2 426 901 A1**
(43) Date of publication of application: **07.03.2012**
(21) Application number: 10175664.1
(22) Date of filing: 07.09.2010
(51) Int. Cl.: H04M 1/663

(54) **Callback option**

(71) Applicant: Research in Motion Limited, Waterloo, Ontario N2L 3W8 (CA)
(72) Inventor: Martin, Daryl Joseph, Waterloo Ontario N2L 5R9 (CA)
(74) Representative: Phillips, Emily Elizabeth

(57) **Abstract**

A method (600) comprising establishing a first call between a first device having an associated first user and a second device having an associated second user (602). During the first call, the first device receives a second call from a third device having an associated third user (604). In response to receiving the second call, the first user is prompted with call-back options to respond to the second call (606). The call-back options can include ignore, accept, and auto-schedule a return call. In the event the auto-schedule a return call option is selected, an auto-schedule command is sent from the first device to a server (614). After the first call is terminated (618), the first user is prompted with calling options to call the third device in response to the first call terminating (620).

## Description

### FIELD OF THE TECHNOLOGY

The present disclosure relates generally to a callback option. More specifically, the present disclosure relates to a callback option that allows a first device, which is in communication with a second device, to schedule a callback to a third device in the event the third device calls the first device during the communication between the first device and second device.

### BACKGROUND

Mobile devices are becoming more popular and are becoming more prevalent in society. As a result, some people can be reached twenty-four hours a day, seven days a week. Consequently, some people can also choose not to be available. For example, someone can receive a notification of a call on his or her mobile device when the person is in a meeting or when they are driving a vehicle. In such situations, the person may want to take the call, but cannot. As a result, the person placing the call may leave a message or the mobile device that is called may provide notification of the missed call. However, the person who made the call does not know if the person the caller was trying to reach is aware of the initial phone call.

### BRIEF DESCRIPTION OF THE DRAWINGS

Figure 1 is a block diagram of a system for managing enterprise-related mobile calls, including an enterprise communications platform in accordance with an exemplary implementation;

Figure 2 is a block diagram of the enterprise communications platform in accordance with an exemplary implementation;

Figure 3 is a block diagram of an alternate enterprise communications platform in accordance with an exemplary implementation;

Figure 4 is a block diagram of another alternate enterprise communications platform in accordance with an exemplary implementation;

Figure 5 is a more detailed block diagram of the enterprise communications platform of Figure 3, in accordance with an exemplary implementation;

Figures 6A and 6B are flowcharts of a method of the callback option in accordance with an exemplary implementation;

Figure 7 is an exemplary screenshot of the display of the first device with the callback options in accordance with an exemplary implementation;

Figure 8 is an exemplary screenshot of a display of the first device with the callback options in accordance with an exemplary implementation;

Figure 9 is an exemplary screenshot of a display of the first device for setting one or more custom text message in accordance with an exemplary implementation;

Figure 10 is an exemplary screenshot of a display of the first device with the prompts for callback options for a single callback in accordance with an exemplary implementation;

Figure 11 is an exemplary screenshot of a display of the first device with the prompts for callback options for multiple callbacks in accordance with an exemplary implementation;

Figure 12 is an exemplary screenshot of a display of the first device with the prompts for each scheduled callback in accordance with an exemplary implementation;

Figure 13 is an exemplary screenshot of a display of the first device for setting the callback reminders in accordance with an exemplary implementation; and

Figure 14 is an exemplary screenshot of a display of the first device for setting the callback feature in accordance with an exemplary implementation.

### DETAILED DESCRIPTION

Reference will now be made in detail to implementations of the technology. Each example is provided by way of explanation of the technology only, not as a limitation of the technology. It will be apparent to those skilled in the art that various modifications and variations can be made in the present technology without departing from the scope or spirit of the technology. For instance, features described as part of one implementation can be used on another implementation to yield a still further implementation. Thus, it is intended that the present technology cover such modifications and variations that come within the scope of the technology. Other aspects of the present technology will be apparent to those of ordinary skill in the art from a review of the following detailed description in conjunction with the drawings. Implementations of the present technology are not limited to any particular operating system, mobile device architecture, server architecture, or computer programming language.

The present technology relates to the control and management of communications. Although reference may be made to "calls" in the description of example implementations below, it will be appreciated that the described systems and methods are applicable to session-based communications in general and not limited to voice calls. It will also be appreciated that the systems and methods may not be limited to sessions and may be applicable to messaging-based communications in some implementations.

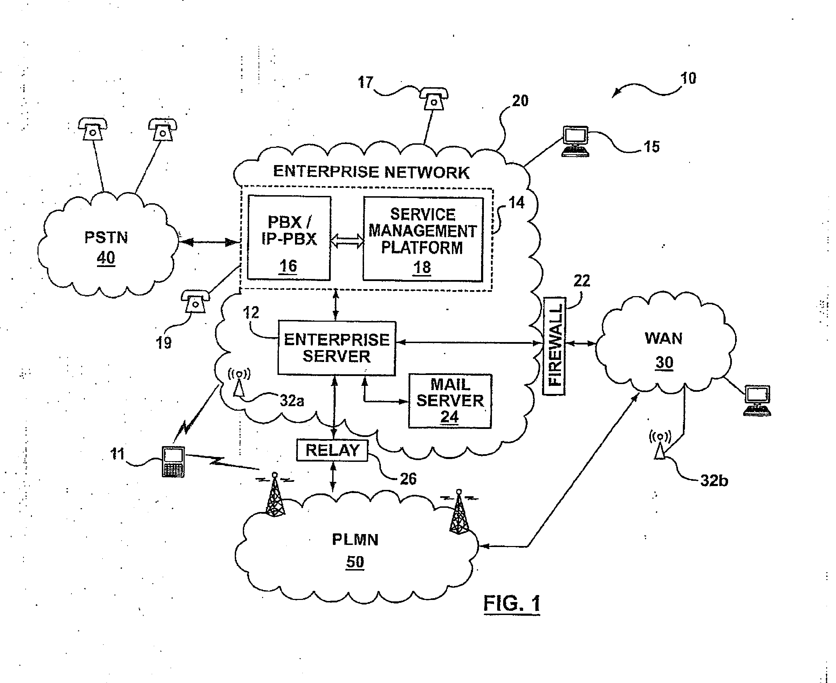

Reference is now made to Figure 1, which shows, in block diagram form, an example system, generally designated 10, for the control and management of communications. The system 10 includes an enterprise or business system 20, which in many implementations includes a local area network (LAN). In the description below, the enterprise or business system 20 may be referred to as an enterprise network 20. It will be appreciated that the enterprise network 20 may include more than one network and may be located in multiple geographic areas in some implementations.

The enterprise network 20 may be connected, often through a firewall 22, to a wide area network (WAN) 30, such as the Internet. The enterprise network 20 may also be connected to a public switched telephone network (PSTN) 40 via direct inward dialing (DID) trunks or primary rate interface (PRI) trunks.

The enterprise network 20 may also communicate with a public land mobile network (PLMN) 50, which may also be referred to as a wireless wide area network (WWAN) or, in some cases, a cellular network. The connection with the PLMN 50 may be made via a relay 26, as known in the art.

The enterprise network 20 may also provide a wireless local area network (WLAN) 32a featuring wireless access points. Other WLANs 32 may exist outside the enterprise network 20. For example, WLAN 32b may be connected to WAN 30.

The system 10 may include a number of enterprise-associated mobile devices 11 (only one shown). The mobile devices 11 may include devices equipped for cellular communication through the PLMN 50, mobile devices equipped for Wi-Fi communications over one of the WLANs 32, or dual-mode devices capable of both cellular and WLAN communications. WLANs 32 may be configured in accordance with one of the IEEE 802.11 specifications.

It will be understood that the mobile devices 11 include one or more radio transceivers and associated processing hardware and software to enable wireless communications with the PLMN 50 and/or one of the WLANs 32. In various implementations, the PLMN 50 and mobile devices 11 may be configured to operate in compliance with any one or more of a number of wireless protocols, including GSM, GPRS, CDMA, EDGE, UMTS, EvDO, HSPA, 3GPP, or a variety of others. It will be appreciated that the mobile device 11 may roam within the PLMN 50 and across PLMNs, in known manner, as the device moves. In some instances, the dual-mode mobile devices 11 and/or the enterprise network 20 are configured to facilitate roaming between the PLMN 50 and a WLAN 32, and are thus capable of seamlessly transferring sessions (such as voice calls) from a connection with the cellular interface of the dual-mode device 11 to the WLAN 32 interface of the dual-mode device 11, and vice versa.

The enterprise network 20 typically includes a number of networked servers, computers, and other devices. For example, the enterprise network 20 may connect one or more desktop or laptop computers 15 (one shown). The connection may be wired or wireless in some implementations. The enterprise network 20 may also connect to one or more digital telephone sets 17 (one shown).

The enterprise network 20 may include one or more mail servers, such as mail server 24, for coordinating the transmission, storage, and receipt of electronic messages for client devices operating within the enterprise network 20. Typical mail servers include the Microsoft Exchange ServerTM and the IBM Lotus DominoTM server. Each user within the enterprise typically has at least one user account within the enterprise network 20. Associated with each user account is message address information, such as an e-mail address. Messages addressed to a user message address are stored on the enterprise network 20 in the mail server 24. The messages may be retrieved by the user using a messaging application, such as an e-mail client application. The messaging application may be operating on a user's computer 15 connected to the enterprise network 20 within the enterprise. In some implementations, the user may be permitted to access stored messages using a remote computer, for example at another location via the WAN 30 using a VPN connection. Using the messaging application, the user may also compose and send messages addressed to others, within or outside the enterprise network 20. The messaging application causes the mail server 24 to send a composed message to the addressee, often via the WAN 30.

The relay 26 serves to route messages received over the PLMN 50 from the mobile device 11 to the corresponding enterprise network 20. The relay 26 also pushes messages from the enterprise network 20 to the mobile device 11 via the PLMN 50.

The enterprise network 20 also includes an enterprise server 12. Together with the relay 26, the enterprise server 12 functions to redirect or relay incoming e-mail messages addressed to a user's e-mail address within the enterprise network 20 to the user's mobile device 11 and to relay incoming e-mail messages composed and sent via the mobile device 11 out to the intended recipients within the WAN 30 or elsewhere. The enterprise server 12 and relay 26 together facilitate "push" e-mail service for the mobile device 11 enabling the user to send and receive e-mail messages using the mobile device 11 as though the user were connected to an e-mail client within the enterprise network 20 using the user's enterprise-related e-mail address, for example on computer 15.

As is typical in many enterprises, the enterprise network 20 includes a Private Branch exchange (although in various implementations the PBX may be a standard PBX or an Internet Protocol (IP)-PBX, for simplicity the description herein uses the term PBX to refer to both) 16 having a connection with the PSTN 40 for routing incoming and outgoing voice calls for the enterprise. The PBX 16 is connected to the PSTN 40 via DID trunks or PRI trunks, for example. The PBX 16 may use Integrated Services Digital Network (ISDN) signaling protocols for setting up and tearing down circuit-switched connections through the PSTN 40 and related signaling and communications. In some implementations, the PBX 16 may be connected to one or more conventional analog telephones 19. The PBX 16 is also connected to the enterprise network 20 and, through it, to telephone terminal devices, such as digital telephone sets 17, softphones operating on computers 15, etc. Within the enterprise, each individual may have an associated extension number, sometimes referred to as a PNP (private numbering plan), or direct dial phone number. Calls outgoing from the PBX 16 to the PSTN 40 or incoming from the PSTN 40 to the PBX 16 are typically circuit-switched calls. Within the enterprise, e.g. between the PBX 16 and terminal devices, voice calls are often packet-switched calls, for example Voice-over-IP (VoIP) calls.

The enterprise network 20 may further include a Service Management Platform (SMP) 18 for performing some aspects of messaging or session control, like call control and advanced call processing features. The SMP 18 may, in some cases, also perform some media handling. Collectively the SMP 18 and PBX 16 may be referred to as the enterprise communications platform, generally designated 14. It will be appreciated that the enterprise communications platform 14 and, in particular, the SMP 18, is implemented on one or more servers having suitable communications interfaces for connecting to and communicating with the PBX 16 and/or DID/PRI trunks. Although the SMP 18 may be implemented on a stand-alone server, it will be appreciated that it may be implemented into an existing control agent/server as a logical software component. As will be described below, the SMP 18 may be implemented as a multi-layer platform.

The enterprise communications platform 14 implements the switching to connect session legs and may provide the conversion between, for example, a circuit-switched call and a VoIP call, or to connect legs of other media sessions. In some implementations, in the context of voice calls the enterprise communications platform 14 provides a number of additional functions including automated attendant, interactive voice response, call forwarding, voice mail, etc. It may also implement certain usage restrictions on enterprise users, such as blocking international calls or 1-900 calls. In many implementations, Session Initiation Protocol (SIP) may be used to set-up, manage, and terminate media sessions for voice calls. Other protocols may also be employed by the enterprise communications platform 14, for example, Web Services, Computer Telephony Integration (CTI) protocol, Session Initiation Protocol for Instant Messaging and Presence Leveraging Extensions (SIMPLE), and various custom Application Programming Interfaces (APIs), as are known to those of skill in the art and may be described in greater detail below.

One of the functions of the enterprise communications platform 14 is to extend the features of enterprise telephony to the mobile devices 11. For example, the enterprise communications platform 14 may allow the mobile device 11 to perform functions akin to those normally available on a standard office telephone, such as the digital telephone set 17 or analog telephone set 15. Example features may include direct extension dialing, enterprise voice mail, conferencing, call transfer, call park, etc.

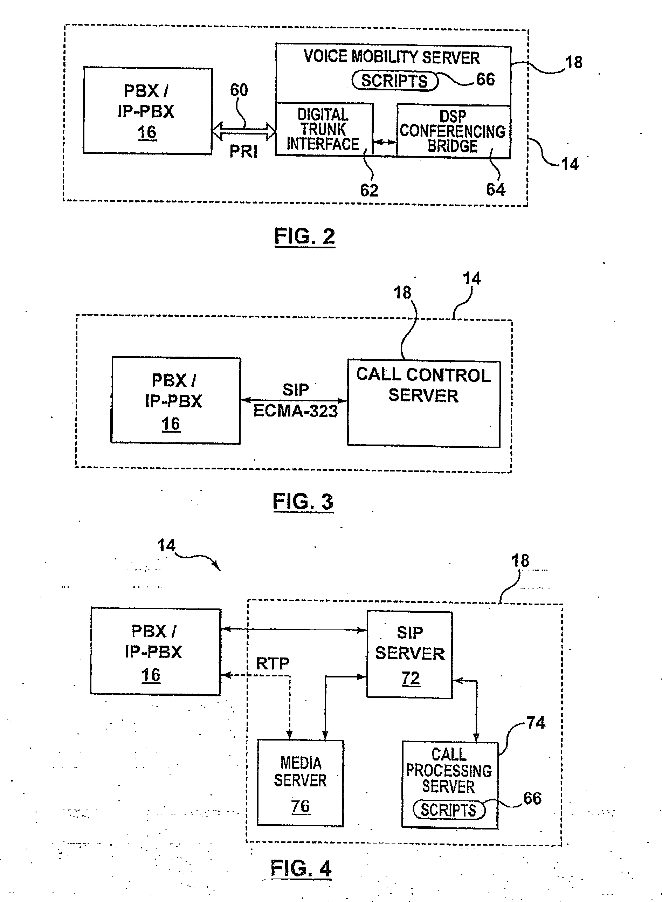

Reference is now made to Figures 2 to 4, which show example implementations of the enterprise communications system 14. Again, although references are made below to "calls" or call-centric features it will be appreciated that the architectures and systems depicted and described are applicable to session-based communications in general and, in some instances, to messaging-based communications.

Figure 2 illustrates an implementation intended for use in a circuit-switched TDM context. The PBX 16 is coupled to the SMP 18 via PRI connection 60 or other suitable digital trunk. In some implementations, the PRI connection 60 may include a first PRI connection, a second PRI connection, and a channel service unit (CSU), wherein the CSU is a mechanism for connecting computing devices to digital mediums in a manner that allows for the retiming and regeneration of incoming signals. It will be appreciated that there may be additional or alternative connections between the PBX 16 and the SMP 18.

In this implementation, the SMP 18 assumes control over both call processing and the media itself. This architecture may be referred to as "First Party Call Control." Many of the media handling functions normally implemented by the PBX 16 can be handled by the SMP 18 in this architecture. Incoming calls addressed to any extension or direct dial number within the enterprise, for example, can be first routed to the SMP 18. Thereafter, a call leg is established from the SMP 18 to the called party within the enterprise, and the two legs are bridged. Accordingly, the SMP 18 includes a digital trunk interface 62 and a digital signal processing (DSP) conferencing bridge 64. The DSP conferencing bridge 64 performs the bridging of calls for implementation of various call features, such as conferencing, call transfer, etc. The digital trunk interface 62 may be implemented as a plurality of telephonic cards, e.g. Intel Dialogic cards, interconnected by a bus and operating under the control of a processor. The digital trunk interface 62 may also be partly implemented using a processor module such as, for example, a Host Media Processing (HMP) processor.

The SMP 18 may include various scripts 66 for managing call processing. The scripts 66 may be implemented as software modules, routines, functions, etc., stored in non-volatile memory and executed by the processor of the SMP 18. The scripts 66 may implement call flow logic, business logic, user preferences, call service processes, and various feature applications.

Figure 3 shows another implementation in which the PBX 16 performs the functions of terminating and/or bridging media streams, but call control functions are largely handled by the SMP 18. In this implementation, the SMP 18 may be referred to as a call control server 18. This architecture may be referred to as "Third-Party Call Control".

The call control server 18 is coupled to the PBX 16, for example through the LAN, enabling packet-based communications and, more specifically, IP-based communications. In one implementation, communications between the PBX 16 and the call control server 18 are carried out in accordance with SIP. In other words, the call control server 18 uses SIP-based communications to manage the set up, tear down, and control of media handled by the PBX 16. In one example implementation, the call control server 18 may employ a communications protocol conforming to the ECMA-269 or ECMA-323 standards for Computer Supported Telecommunications Applications (CSTA)

Figure 4 shows yet another implementation of the enterprise communications system 14. This implementation reflects the adaptation of an existing set of call processing scripts to an architecture that relies on third-party call control, with separate call control and media handling. The SMP 18 includes a call processing server 74. The call processing server 74 includes the scripts 66 or other programming constructs for performing call handling functions. The SMP 18 also includes a SIP server 72 and a media server 76. The separate SIP server 72 and media server 76 logically separate the call control from media handling. The SIP server 72 interacts with the call processing server 74 using a computer-implemented communications handling protocol, such as one of the ECMA-269 or ECMA-323 standards. These standards prescribe XML based messaging for implementing Computer Supported Telecommunications Applications (CSTA).

The SIP server 72 interacts with the media server 76 using SIP-based media handling commands. For example, the SIP server 72 and media server 76 may communicate using Media Server Markup Language (MSML) as defined in IETF document Saleem A., "Media Server Markup Language", Internet Draft, draft-saleem-msml-07, August 7, 2008. The media server 76 may be configured to perform Host Media Processing (HMP). Other architectures or configurations for the enterprise communications system 14 will be appreciated by those of ordinarily skilled in the art.

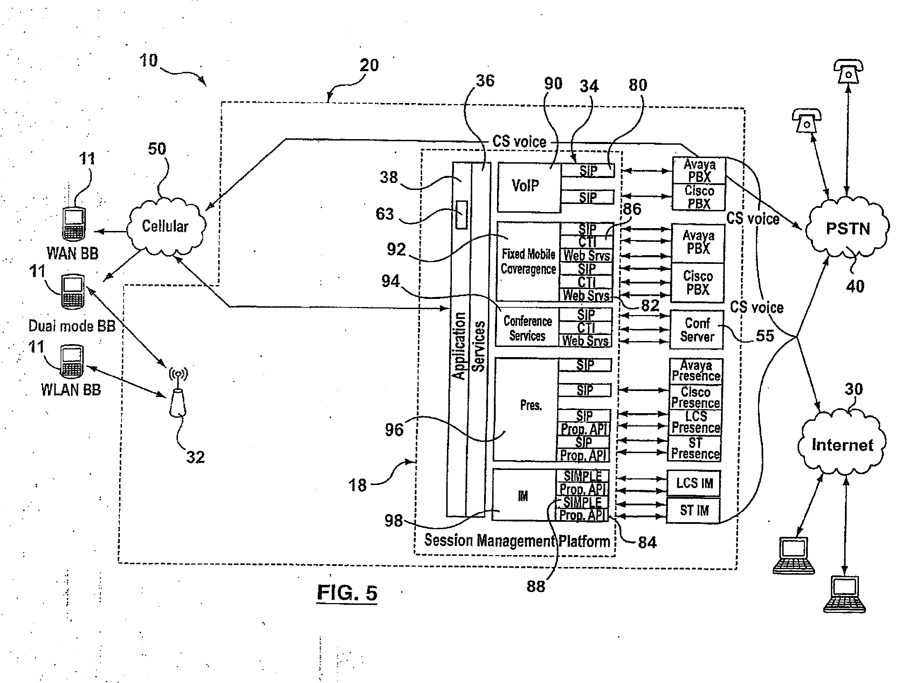

Reference is now made to Figure 5, which shows an implementation of the enterprise communications system 14 with a Third Party Call Control architecture. In this implementation, the SMP 18 is a multi-layer platform that includes a protocol layer 34, a services layer 36 and an application layer 38. The protocol layer 34 includes a plurality of interfaces operating in accordance with various protocol, each interface configured for enabling operation of corresponding applications in the application layer 38. The services layer 36 includes a plurality of services that can be leveraged by the interface protocols to create richer applications. Finally, the application layer 38 includes a plurality of applications that are exposed out to the communication devices and that leverage corresponding ones of the services and interface protocols for enabling the applications.

Specifically, the protocol layer 34 preferably includes protocols which allow media to be controlled separate from data. For example, the protocol layer 34 can include, among other things, a Session Initiation Protocol or SIP 80, a Web Services protocol 82, an Application Programming Interface or API 84, a Computer Telephony Integration protocol or CTI 86, and a Session Initiation Protocol for Instant Messaging and Presence Leveraging Extensions or SIMPLE protocol 88. It is contemplated that the interface protocols 80-88 are plug-ins that can interface directly with corresponding servers in the enterprise network 20, which are further described below.

For the purposes of this disclosure, SIP 80 will be utilized, although it is appreciated that the system 10 can operate using the above disclosed or additional protocols. As known by those of ordinary skill in the art, SIP is the IETF (Internet Engineering Task Force) standard for multimedia session management, and more specifically is an application-layer control protocol for establishing, maintaining, modifying and terminating multimedia sessions between two or more endpoints. As further known by those of ordinary skill in the art, the SIP protocol 80 provides for two interfaces for signaling: SIP-Trunk (hereinafter referred to as "SIP-T") and SIP-Line (hereinafter referred to as "SIP-L"). The SIP-T interface is utilized when the endpoint is a non-specific entity or not registered (i.e., when communicating between two network entities). In contrast, the SIP-L interface is utilized when the endpoint is registered (i.e., when dialing to a specific extension). The specific operation of the system 10 utilizing SIP 80 will be described in further detail below.

The SMP 18 also includes a plurality of enablers, among other things, a VoIP enabler 90, a Fixed Mobile Convergence or FMC enabler 92, a conference services enabler 94, a presence enabler 96 and an Instant Messaging or IM enabler 98. Each of the enablers 90-98 are used by corresponding services in the services layer 36 that combine one or more of the enablers. Each of the applications in the application layer 38 is then combined with one or more of the services to perform the desired application. For example, a phone call service may use the VoIP or PBX enabler, and an emergency response application may use the phone call service, an Instant Messenger service, a video call service, and email service and/or a conference service.

The application layer 38 may include a conference services application 63 that, together .......with the conference services enabler 94, enables multiple communication devices (including desk telephones and personal computers) to participate in a conference call through use of a .... centralized conference server 55. As seen in Figure 5, the conference server 55 is provided in the enterprise network 20 and is in communication with the conference services enabler 94 preferably through the SIP protocol 80, although it is recognized that additional protocols that control media separate from data may be appropriate, such as the Web Services protocol 82 or the CTI protocol 86. The conference call server 55 can be configured for directing media and data streams to and from one or more communication devices (i.e., mobile devices 11, telephones 17, and computers 15).

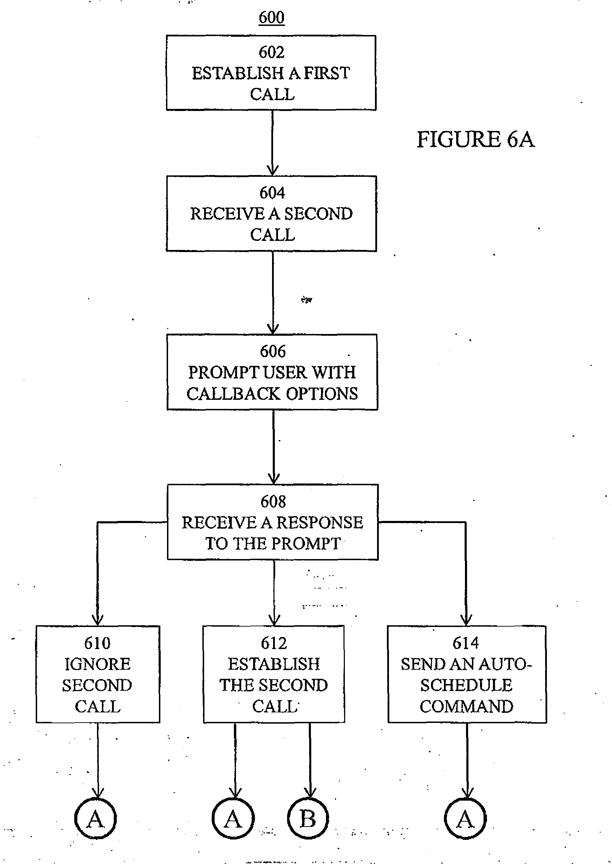

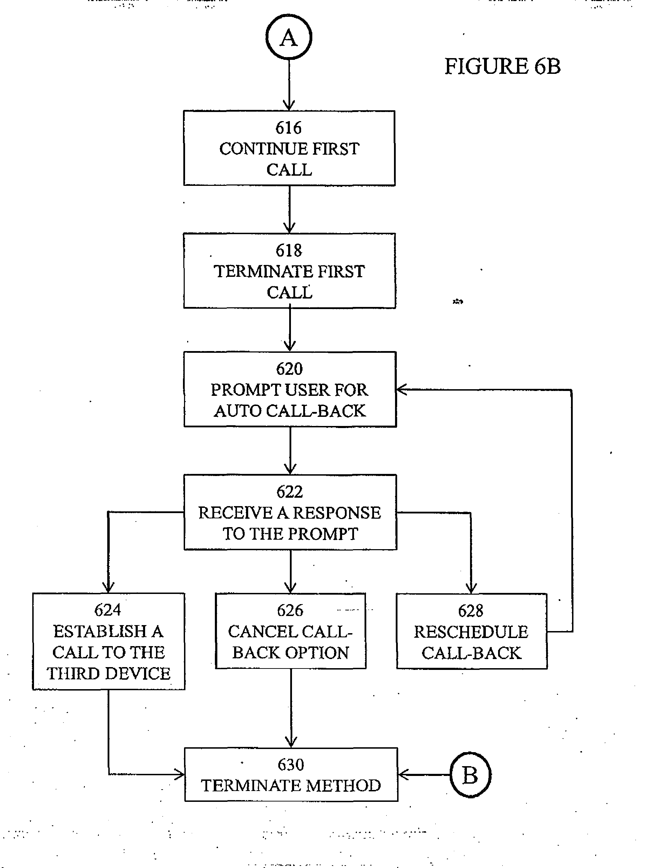

Referring to Figures 6A and 6B, a flowchart of a method for using a callback option in accordance with an exemplary implementation is illustrated. The exemplary method 600 is provided by way of example, as there are a variety of ways to carry out the method. In one or more implementations, the method 600 can be performed using one or more servers, e.g., enterprise server 12, enterprise communication platform 14, SMP 18, or any other suitable server or servers. The method 600 can be executed or otherwise performed by one or a combination of various systems. The method 600 described below can be carried out using the communication devices and communication network shown in Figures 1-5 by way of example, and various elements of these figures are referenced in explaining exemplary method 600. For example, the first device, second device or third device described in Figure 6 can be a mobile device 11 or telephone terminal devices, such as softphones operating on computers 15 or a digital telephone set 17. Each block shown in Figure 6 represents one or more processes, methods or subroutines carried out in exemplary method 600. The exemplary method 600 may begin at block 602.

At block 602, a first call is established between a first device and a second device. For example, the SMP 18 can establish a first call between the first device 11 having an associated first user and the second device 11 having an associated second user. After establishing the first call, the method 600 can proceed to block 604.

At block 604, the first device receives a second call from a third device. For example, the SMP 18 sends an INVITE SIP message to the first device 11, informing the first device 11 that the third device 11 having an associated third user is calling the first device 11. After receiving the second call, the method 600 can proceed to block 606.

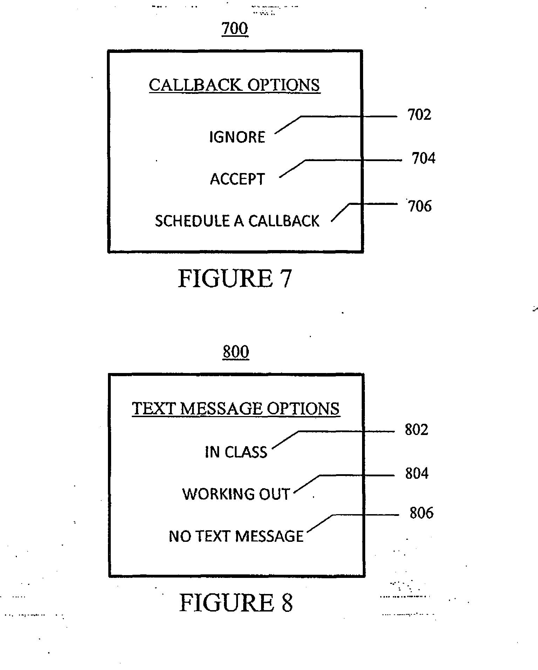

At block 606, the first user is prompted with callback options for responding to the second call. For example, the first device 11 displays callback options for the first user to choose. The callback options can include, but are not limited to, ignore, accept and auto-schedule a return call (hereinafter referred to as "auto-schedule"). Referring to Figure 7, an exemplary screenshot 700 of the display of the first device 11 with the callback options in accordance with an exemplary implementation is illustrated. As shown, the screenshot 700 can include callback options, such as ignore 702, accept 704, and auto-schedule a return call 706. After prompting the first user, the method 600 can proceed to block 608.

At block 608, a response to the callback options prompt is received. For example, the first user selects an option on the first device 11 and the SMP 18 responds according to the selection. If the ignore option is selected the method 600 can proceed to block 610. If the accept option is selected, the method 600 can proceed to block 612. If the auto-schedule option is selected, the method 600 can proceed to block 614.

At block 610, the second call is ignored by the first device. For example, the first device 11 can send an ignore message to the SMP 18 to ignore the second call. The ignored message can be a BYE SIP command message. In response to the ignore selection, the second call can be treated in a similar manner as an unanswered call. For example, after a set number of rings, the third user can be prompted to leave a message for the first user associated with the first device 11. In one or more implementations, if the first user selects the ignore option, the third user can be prompted to leave a message without having to wait for the set number of rings. After sending an ignore message, the method 600 can proceed to block 616.

At block 612, a second call is established between the first device and the second device. For example, the SMP 18 can establish the second call between the first device 11 and a third device 11. The first call can be terminated or can be put on hold. If the first call is terminated, the first user can end the first call. To terminate the first call, the first device can send a BYE SIP command message to the SMP 18. If the first call is put on hold, the first call can be put in call waiting. To put the first call in call waiting, the first device can send a command message to the SMP 18. After establishing the second call, the method 600 can proceed to block 616 if the first call was put on hold or can proceed to block 630 if the first call was terminated.

At block 614, an auto-schedule command is sent. For example, the auto-schedule command can be sent from the first device to the SMP 18. The auto-schedule command can be a command message. In response to receiving the auto-schedule command, the SMP 18 can schedule a callback call to the third device. After sending the auto-schedule command, the method 600 can proceed to block 616.

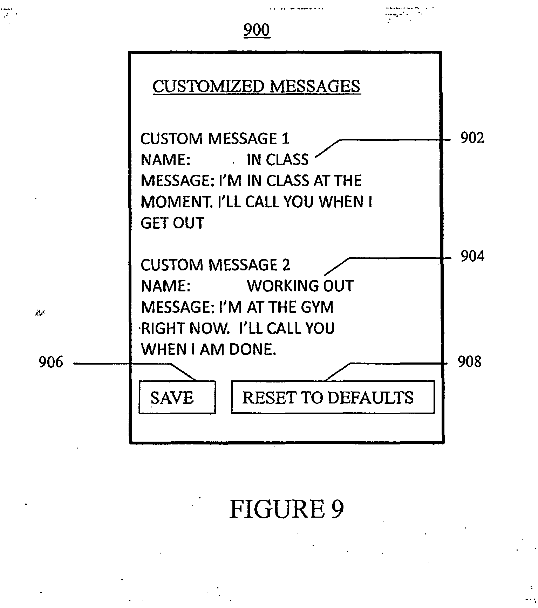

Depending on the setup of the first device, if the first user selects the auto-schedule command, the third user can receive notification that a callback has been scheduled. The notification can be done in various means. For example, the SMP 18 can play an audio message on the third device 11 informing the third user that a callback has been scheduled. An exemplary audio message can be "The user is currently on the phone but he has scheduled an automatic return call for you as soon as he is free so you can hang-up now." In another example, the SMP 18 can send a message, e.g., an email message or text message, to the third device 11 informing the third user that a callback has been scheduled. Referring to Figure 8, an exemplary screenshot 800 of a display of the first device 11 with the callback options in accordance with an exemplary implementation is illustrated. As shown, the screenshot 800 can include text message options which can include an in class text message 802, working out text message 804 or no text message 806. Referring to Figure 9, an exemplary screenshot 900 of a display of the first device 11 for setting one or more custom text message in accordance with an exemplary implementation is illustrated. As shown, the screenshot 900 can include a class text message 902 which recites "I'm in class at the moment. I'll call you when I get out." and a gym text message 904 which recites "I'm at the gym right now. I'll call you when I am done." The user can save a text message by clicking on the "Save" button 906 or can reset the text messages to defaults by clicking on the "Reset to Defaults" button 908. Exemplary default text messages can be "I'm unavailable right now. I have scheduled a callback to return your call." More or less custom messages or default messages can be used. In one more implementations, email messages or custom email messages can be sent using similar methods. In one more implementations, the user can select between text messages, custom text message, email messages, or custom email messages.

Returning to Figure 6B, at block 616, the first call is continued. For example, if the second call is ignored, the first device can remove the prompt and the first call is continued. If the first call was put on hold, then after the second call is terminated, then the SMP 18 can take the first call off hold. After continuing the first call, the method can proceed to the block 618.

At block 618, the first call is terminated. For example, the first user or second user can terminate the first call. A call termination message can be sent from the first device or second device to the SMP 18. The call termination message can be a BYE SIP command message. After terminating the first call, the method 600 can proceed to block 620.

At block 620, the first user is prompted to place the auto-schedule call, e.g., call the caller associated with the third device. The callback reminder can be in response to the first call being terminated or can be scheduled. For example, the SMP 18 sends a return auto-schedule call command to the first device 11 prompting the first user to call the third user on the third device 11. The return auto-schedule call command can be a command message. The prompt can include, but is not limited to, call, cancel and re-schedule the auto-schedule. After the user is prompted to place the auto-schedule call, the method 600 can proceed to block 622.

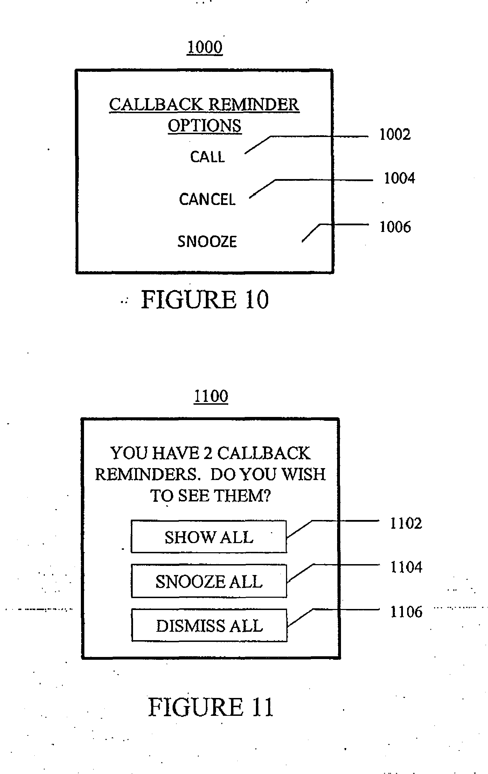

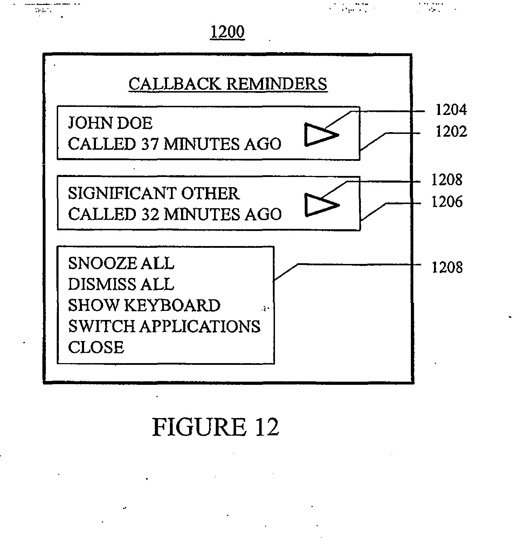

Referring to Figure 10, an exemplary screenshot 1000 of a display of the first device 11 with the prompts for callback options for a single callback in accordance with an exemplary implementation is illustrated. As shown, the screenshot 1000 can include a reminder for a single scheduled callback. The options can include call 1102, cancel 1104, and snooze 1106. If there are multiple scheduled call backs, the user can be prompted with a different message. Referring to Figure 11, an exemplary screenshot 1100 of a display of the first device 11 with the prompts for callback options for multiple callbacks in accordance with an exemplary implementation is illustrated. As shown, the screenshot 1100 can inform the user of the number of callback reminders, e.g., "You have 2 callback reminders. Do you wish to see them?" The options can include show all 1102, snooze all 1104, and dismiss all 1106. If the user clicks on the show all 1102 option, another screenshot can be displayed. Referring to Figure 12, an exemplary screenshot 1200 of a display of the first device 11 with the prompts for each scheduled callback in accordance with an exemplary implementation is illustrated. As shown, the user can select each callback message by clicking on a show more option icon 1204, 1208 for each callback message 1202, 1206. If you user clicks on the show more option icon 1202, 1208, then the screenshot 1000 of Figure 10 can be displayed showing the available options. The screenshot 1200 of the multiple callback reminders shows two messages, John Doe 1202 who called thirty-seven (37) minutes ago and Significant Other 1206 who called thirty-two (32) minutes ago. Additional options 1208 are also available. The additional options 1208 include snooze all, dismiss all, show keyboard, switch applications, and close. The snooze all option allows all the user to snooze the callback options, e.g., be prompted again. The dismiss all option cancels all of the callback options. The show keyboard can display a keyboard to allow the user to type a message, e.g., a text message or email. The switch applications option allows the user to change applications, e.g., show a calendar. The close option closes the callback reminder screenshot 1200.

Returning to Figure 6B, at block 622, a response to the auto-schedule call prompt is received. For example, the first user selects an option on the first device 11 and the SMP 18 responds according to the selection. If the call option is selected the method 600 can proceed to block 624. If the cancel option or cancel all option is selected, the method 600 can proceed to block 626. If the snooze option or snooze all option is selected, the method 600 can proceed to block 628.

At block 624, a call is established between the first device and the third device. For example, the SMP 18 can send an initiate call command message to the third device to establish a call between the first device and the third device. The call command message can be an INVITE SIP command. After calling the third device, the method 600 can terminate at block 630.

At block 626, the auto-schedule is canceled. For example, the first device 11 can send a cancel auto-schedule command to the SMP 18 to cancel the auto-schedule callback or cancel all of the auto-schedule callbacks. After canceling the auto-schedule, the method 600 can terminate at block 630,

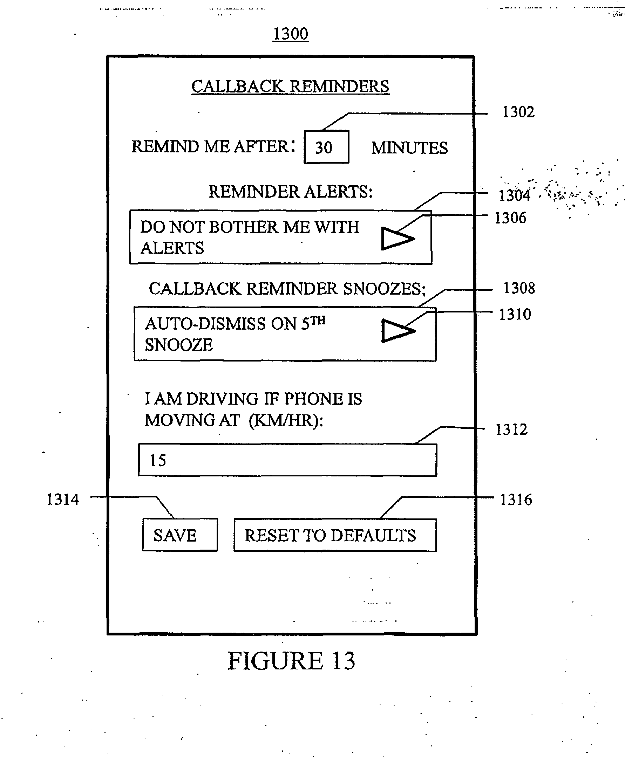

At block 628, the auto-schedule is re-scheduled, e.g., snoozed. For example, the auto-schedule command can be sent from the first device to the SMP 18. The auto-schedule command can be a command message. In response to receiving the auto-schedule command, the SMP 18 can re-schedule a return call or all return calls. In one or more implementations, the first user is prompted on the first device 11 in a similar manner as a meeting request reminder. Referring to Figure 13, an exemplary screenshot 1300 of a display of the first device 11 for setting the callback reminders in accordance with an exemplary implementation is illustrated. As shown, the user can select the amount of time 1302 to pass after a call is auto-scheduled for a callback, e.g., "Remind me after 30 minutes." The user can select the reminder alert 1304, e.g., "Do not bother me with alerts." By clicking on the show me more icon 1306, the user can select the reminder alerts, e.g., do not bother me, remind me only of my most recent call, remind me of only contacts in my contacts folder, remind me of all auto-scheduled calls. The user can select the number of snoozes before the auto-schedule callback is canceled 1308. By clicking on the show me more icon 1310, the user can select the number of snoozes, e.g., first, second, third, fourth, fifth, ... unlimited. The user can select the speed that the device 11 is moving, e.g., if the device 11 is moving at or above the speed, e.g., fifteen kilometers per hour (15 km/hr), then all calls are auto-scheduled for callbacks. The user can save a text message by clicking on the "Save" button 1314 or can reset the text messages to defaults by clicking on the "Reset to Defaults" button 1316. After re-scheduling the auto-schedule a return call, the method 600 can proceed to block 620.

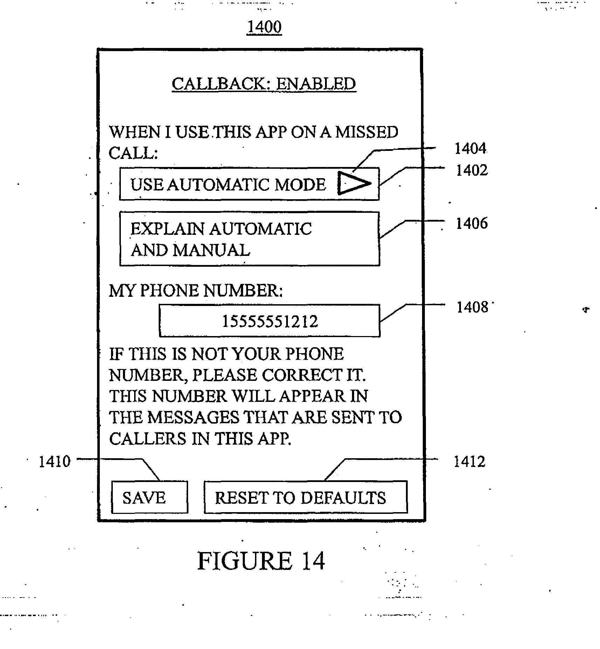

Referring to Figure 14, an exemplary screenshot 1400 of a display of the first device 11 for setting the callback feature in accordance with an exemplary implementation is illustrated. As shown, the device 11 is set for automatic mode 1402. By clicking on the show more icon 1404, the user can select automatic mode, manual mode or off. In automatic mode, the device 11 automatically schedules callbacks. In manual mode, the user is prompted whether or not to schedule a callback. In the off mode, the callback feature is not enabled. As shown, the callback feature is enabled. The user can click to display an explanation of the automatic mode and manual mode 1406. The user can enter the user's telephone number 1408 which is provided to the device associated with the caller when a call is scheduled for a callback. The user can save a the settings by clicking on the "Save" button 1410 or can reset the settings to the defaults by clicking on the "Reset to Defaults" button 1412.

The present technology can take the form of hardware, software or both hardware and software elements. In some implementations, the technology is implemented in software, which includes but is not limited to firmware, resident software, microcode, a Field Programmable Gate Array (FPGA) or an Application-Specific Integrated Circuit (ASIC), etc. In particular, for real-time or near real-time use, an FPGA or ASIC implementation is desirable.

Furthermore, the present technology can take the form of a computer program product comprising program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium (though propagation mediums in and of themselves as signal carriers are not included in the definition of physical computer-readable medium). Examples of a physical computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD. Both processors and program code for implementing each as aspect of the technology can be centralized or distributed (or a combination thereof) as known to those skilled in the art.

A data processing system suitable for storing a computer program product of the present technology and for executing the program code of the computer program product will include at least one processor coupled directly or indirectly to memory elements through a system bus. The memory elements can include local memory employed during actual execution of the program code, bulk storage, and cache memories that provide temporary storage of at least some program code in order to reduce the number of times code must be retrieved from bulk storage during execution Input/output or I/O devices (including but not limited to keyboards, displays, pointing devices, etc.) can be coupled to the system either directly or through intervening I/O controllers. Network adapters can also be coupled to the system to enable the data processing system to become coupled to other data processing systems or remote printers or storage devices through intervening private or public networks. Modems, cable modem and Ethernet cards are just a few of the currently available types of network adapters. Such systems can be centralized or distributed, e.g., in peer-to-peer and client/server configurations. In some implementations, the data processing system is implemented using one or both of FPGAs and ASICs.

The system and method described above provide several benefits to a caller (e.g., a second caller) and to the person who is called (e.g., a user) when the user is already talking with someone (e.g., a first caller) using a device. Specifically, a processor in the device can cause the user to be prompted with call back options and can act on the selection. The call-back options can include an auto-schedule a return call which can send an auto-schedule command from the device to a server. After the first call is terminated, the user can be prompted with calling options to call the device of the second caller. As part of the call-back options, the second caller can receive a notification that the user has scheduled a call back to the second caller. As a result, the second caller knows that the user is aware that the second caller wants to talk with the user and will do so when the user finishes a previous call. Thus, the uncertainty of whether the user knows that the second caller is trying to talk to the user is removed. Once the second caller receives notification that the user has scheduled a callback, the second caller can elect not to leave a message thereby conserving voicemail storage space. If the second caller is anxious to talk with the user, the second caller may normally call the user on a regular basis until they reach the user. However, if the second caller receives the notification that the user has scheduled a callback, the second caller may elect not to keep calling the user. As a result, the second caller can reduce the amount of congestion on the network. In addition, the user can be prompted to return the second call which can help prevent the person from forgetting to call the person back.

## Claims

1. A method (600) comprising:
establishing, at a first device having an associated first user, a first call (602) between the first device and a second device having an associated second user;
receiving, at the first device, a second call (604) from a third device having an associated third user;
prompting, at the first device, the first user with call-back options (606) to respond to the second call, the call-back options including at least ignore, accept, and auto-schedule a return call;
sending an auto-schedule command (614) from the first device to a server in the event the auto-schedule a return call option is selected;
terminating the first call (618);
prompting, at the first device, the first user with calling options to call the third device (620) in response to the first call terminating.

2. The method (600) of claim 1 further comprising sending, from the first device, a call command to setup a call between the first device and third device in the event a connect option is selected from the calling options (624).

3. The method of claim 1 further comprising sending, from the first device to the server, a cancel command to cancel the auto-schedule option in the event an ignore option is selected from the calling options (626).

4. The method of claim 1 further comprising:
prompting, at the first device, a time to re-schedule a call between the first device and third device (628); and
sending, from the first device to the server, a re-schedule command in the event a snooze option is selected from the calling options (628).

5. The method of claim 1 further comprising sending, from the first device to the server, a notify command informing the third user that the auto-schedule return call option was selected by the first user via the first device in the event the auto-schedule a return call option was selected (614).

6. The method of claim 5 wherein the notify command results in an audio message being played on the third device.

7. The method of claim 5 wherein the notify command results in a message being sent to the third device wherein the message is one of an email and a text message.

8. The method of claim 5 wherein the notify command results in a custom message being sent to the third device.

9. A server (12) configured to:
establishing a first call (602) between a first device having an associated first user and a second device having an associated second user;
message waiting to the first device, a second call (604) from a third device having an associated third user;
receiving an auto-schedule return call command from the first device in the event the first user selects an auto-schedule return call from a list of options including at least ignore, connect, and auto-schedule a return call (614); and
sending a prompt command to the first device in response to the termination of the first call, the prompt command causing the first user to be prompted with calling options to respond to the second call (620).

10. The server (12) of claim 9 further configured to receive at the server, from the first device, a call command to setup a call between the first device and third device in the event a connect option is selected from the calling options (624).

11. The server (12) of claim 9 further configured to receive at the server, from the first device, a cancel command to cancel the auto-schedule option in the event an ignore option is selected from the calling options (610).

12. The server (12) of claim 9 further configured to receive at the server, from the first device, a re-schedule command having an associated time, the re-schedule command being in the event a snooze command is selected from the calling options (628).

13. The server (12) of claim 9 further configured to send an audio clip to the third device in response to receiving the auto-schedule return call command, the audio clip informing the third user that the first user has scheduled an auto return call;

14. The server (12) of claim 9 further configured to send a text message to the third device in response to receiving the auto-schedule return call command, the text message informing the third user that the auto-schedule return call option was selected by the first user via the first device in the event the auto-schedule a return call option was selected.

15. The server (12) of claim 9 further configured to send, to the first device, a reminder command to prompt the first user with callback reminders options in response to reaching the associated time associated with the re-schedule command.
